Europäisches Patentamt

**European Patent Office**

**Office européen des brevets**

(11) Publication number: **0 020 167**
A1

# EUROPEAN PATENT APPLICATION

(21) Application number: 80301822.5

(22) Date of filing: 02.06.80

(51) Int. Cl.³: **B 63 B 27/22**
// B65G65/20

(30) Priority: 04.06.79 GB 7919416

(71) Applicant: **DRG (UK) LIMITED, 1 Redcliffe Street, Bristol, BS99 7QY (GB)**
Applicant: **Civil and Marine Limited, Johnson's Wharf King Edward Road, Greenhithe Kent (GB)**

(43) Date of publication of application: **10.12.80**
**Bulletin 80/25**

(72) Inventor: **Dowden, Paul John, 13 Cooper Road, Westbury-on-Trym Bristol BS9 3QZ (GB)**

(74) Representative: **Gura, Henry Alan et al, MEWBURN ELLIS & CO. 70 & 72 Chancery Lane, London WC2A 1AD (GB)**

(84) Designated Contracting States: **BE DE FR IT NL SE**

(54) Bucket wheel unloaders especially for ships.

(57) A bucket-wheel unloader mounted on board a ship comprises a rail-mounted carriage (2) movable along the length of a cargo hold (H). A luffing boom (6) is pivoted at one end on the carriage and the opposite end of the boom carries a bucket wheel (12) disposed transversely of the boom (6) with its diameter extending almost across the width of the hold (H). The boom (6) is adjustable to hold the bucket wheel (12) at a controlled depth in the hold (H) and as the carriage (2) moves along the hold (H) the rotating bucket wheel (12) picks up material and transfer it to a conveyor (16) extending along the boom (6). A cross-conveyor (18) adjacent the boom pivot (8) transfers the material from the boom conveyor (16) to a fixed shipsside conveyor (20). The unloader can be operated in either direction of movement of the carriage (2).

0020167

BUCKET WHEEL UNLOADERS ESPECIALLY FOR SHIPS

This invention relates to unloading apparatus for discharging bulk materials in particulate form, such as from a ship's hold, e.g. for off-loading a dredger.

Unloading bulk material from a hold using crane-mounted grabs is a very time-consuming operation, and such grabs require the continuous exercise of skill and judgement by the crane operator. They also involve high maintenance costs and heavy wear and tear both for the equipment and the ship itself. Drag scrapers similarly suffer the disadvantages of high maintenance costs and excessive wear and tear. Various forms of bucket unloader have also been proposed. These unloaders are usually shore-mounted, and one example can be seen in US 3 362 546. These, however, pose other problems. The vessel must be aligned correctly with the shore-mounted equipment, which is particularly difficult for larger vessels, and the relative positions of the vessel and the unloading equipment have to be maintained, which may not be possible in tidal waters. Also, although the vessel avoids the weight penalty involved in carrying its own unloading equipment, this saving can quickly be offset by the greatly increased capital cost of providing a large number of unloading installations at alternative sites.

Ship-mounted bucket unloaders are also known, as in UK 1 385 805 and 1 369 418, but they have their own problems.

Continuous bucket chains may not only be subject to the same disadvantages as drag scrapers but they are also susceptible to jamming of the unloader if the material in the hold caves in upon it and thereby imposes a load that the machine drive cannot work against. Another form of bucket unloader has been proposed in UK 1 528 088 in which a bucket wheel apparatus is driven from a fixed installation into the hold of a ship to unload that hold, but this arrangement is subject to the problems of the known shore-mounted installations as well as the known ship-mounted installations.

It is an object of the present invention to provide a form of unloading apparatus that can be employed effectively as a ship-mounted installation although the scope of the invention is not necessarily limited thus.

According to one aspect of the invention, there is provided a bucket-wheel unloader comprising a carriage having a pivot mounting for an elongate boom, and a bucket wheel mounted on the boom remote from its pivot mounting to be upwardly and downwardly adjustable by movement of the boom about its pivot, the carriage being arranged to progress along a bulk material storage space and the bucket wheel being rotatable in a plane transverse to the direction of movement of the carriage to transfer material from said space onto conveying means extending along the boom as the carriage moves along said space, for said material to be carried by the boom conveying means to off-loading means.

- 3 -

0020167

In an apparatus of this form, the depth of penetration of the bucket wheel into the material can be limited by control of the luffing angle of the boom on its pivot mounting so as to avoid too great a depth of penetration. Moreover, the orientation of the bucket wheel so that it rotates in a plane transverse to the direction of displacement of the carriage while its depth of penetration is so controlled, means that the volume swept by the bucket wheel leaves the remaining material in the space with its top face having sides so sloped that slippage of any large amount of material can be avoided. If it is possible to adopt an arrangement in which the diameter of the wheel is very nearly equal to the width of the storage space, the danger of jamming the wheel in slipped material can be avoided without it being necessary to traverse the wheel laterally of the space.

Thus, according to a preferred form of the invention there is provided a ship having an elongate hold for bulk material and provided with a bucket-wheel unloader for said material comprising a carriage mounted over the hold and movable longitudinally of the hold, a boom pivotally supported on the carriage to be adjustably lowered into the hold, a bucket wheel on the boom remote from its pivot mounting being rotatable in a plane transverse to the direction of carriage displacement, said bucket wheel having a diameter that extends across the major part of the width of the hold, rotation of the bucket wheel as the carriage is progressed along the hold being arranged to transfer material from the hold for off-loading by way of conveying means extending along the boom.

0020167

The bottom of the hold preferably has a transverse profile corresponding approximately to the transverse profile the lower part of the wheel when it is lowered on the boom to adjacent the bottom of the hold.

The invention will be described in more detail by way of example with reference to the accompanying diagrammatic drawings, which illustrate a bucket wheel unloader according to the invention mounted on an ocean-going dredger for the discharge of the material accumulated in the ship's hold.

In the drawings :-

Fig. 1 is a side view of the unloader in a stowed position adjacent the forward end of the ship's hold;

Fig. 2 is a plan view of the unloader in Fig. 1;

Fig. 3 is a schematic end view showing some details of the unloader of Figs. 1 and 2, and illustrating also in outline the transverse profile of the hold;

Fig. 4 is a schematic side view illustrating a modification of the unloader of the preceding figures; and

Fig. 5 is a schematic plan view of a further modified form of unloader.

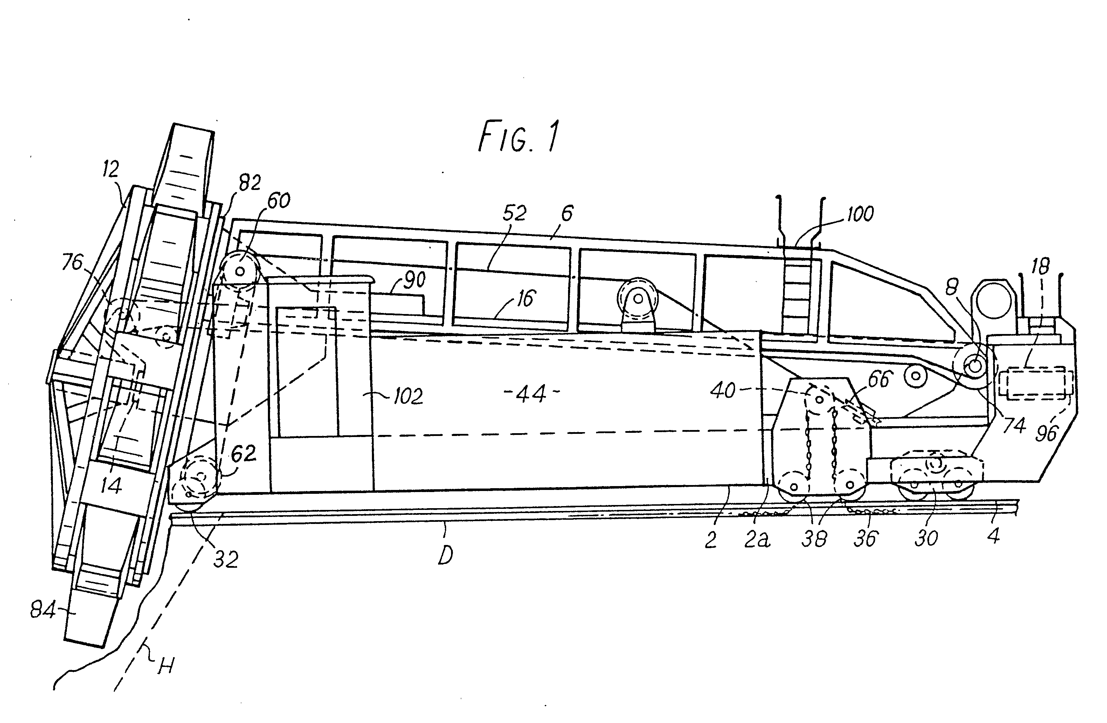

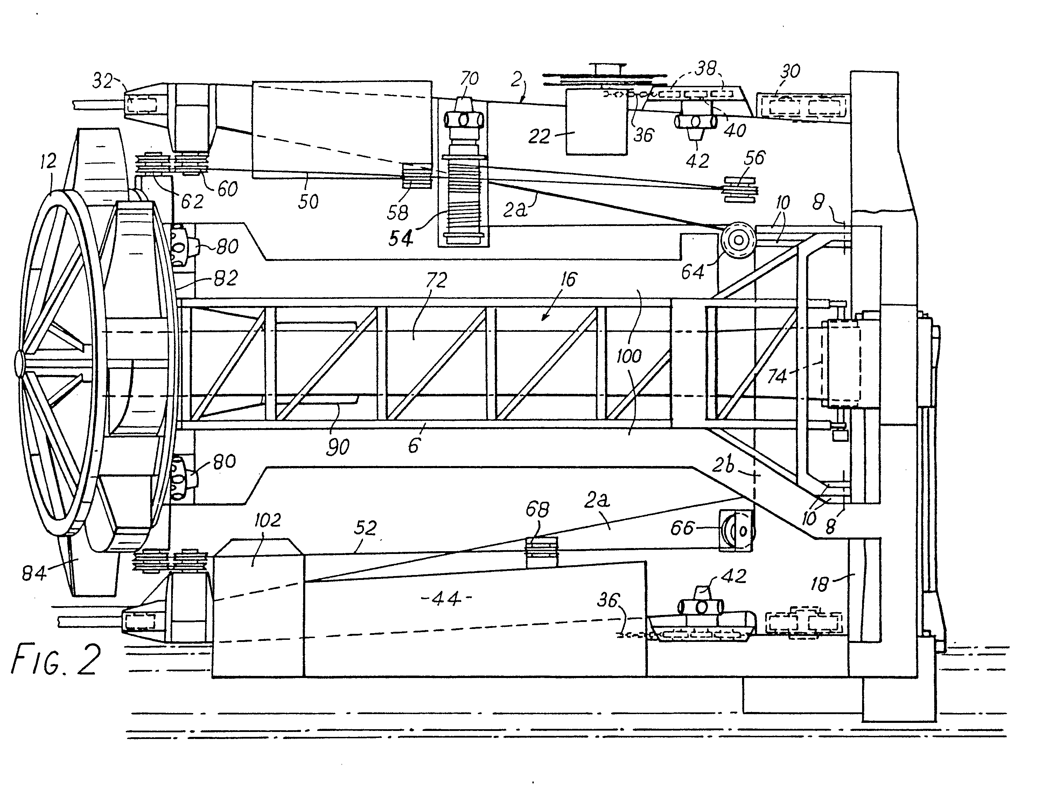

The unloader illustrated in Figs. 1 to 3 comprises a carriage 2 mounted on rails 4 that run along the deck D of the ship, on the coamings on opposite sides of a cargo hold H (not indicated in detail) that extends uninterruptedly over a considerable part of the length of the hull. The carriage is a generally U-form structure with two elongate side
members 2a joined at their forward end by a transverse member
2b, in the manner of a portal frame.

A rigid boom 6, having a lattice or other structure,
is provided with a horizontal transverse pivot mounting 8 at
its forward end to brackets 10 of the carriage. The boom
extends centrally between the side members 2a and can be
luffed about its pivot mounting by a cable drive to be described
below. At the head of the boom, remote from the pivot mounting,
a bucket wheel 12 is journalled on a longitudinally projecting
support 14 extending from the end of the boom and can be lowered
into the ship's hold by the luffing of the boom. The axis of
rotation of the bucket wheel is slightly inclined relative to the
longitudinal axis of the boom, so that the bucket wheel is
tilted upwards when the boom is horizontal, although both axes
are disposed in a central vertical plane of the unloader.

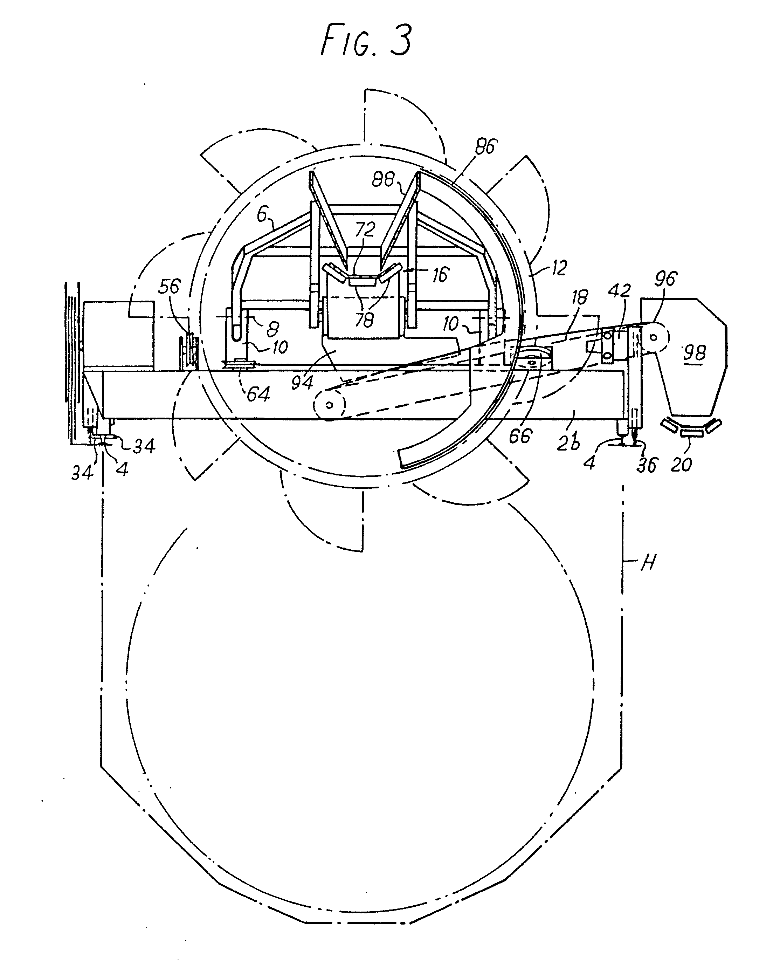

Bulk material is picked up from the hold by the
rotating bucket wheel as the carriage 2 is progressed along
the length of the hold. A belt conveyor 16, mounted on the
boom to project into the centre of the bucket wheel, receives
material discharged from the buckets on the wheel. The other
end of the boom conveyor overhangs a transverse conveyor 18
mounted on the carriage, and material transferred from the
boom conveyor onto the transverse conveyor is in turn discharged onto a ship-side belt conveyor 20 (Fig. 3) mounted
in a fixed position along the ship's deck and extending the
length of the cargo hold. From the conveyor 20 the material
is discharged from the ship. For example, a further conveyor (not shown) can be provided to receive the material from the ship-side conveyor 20, this further conveyor being pivotable outwardly from the ship, to discharge, e.g. onto a required shore location. Power is fed to the unloader from the ship's electrical supply through a trailing cable and reeling drum 22.

The carriage 2 is mounted on the rails 4 through bogies 30 adjacent the boom pivot mounting and further rail wheels 32 at the further ends of the side members 2a. Guide wheels 34 (Fig. 3) are also mounted on the carriage at each side of one of the rails 4 to retain the carriage laterally against side forces, e.g. due to rolling of the ship. The carriage is driven by a static twin chain drive that comprises respective chains 36 at opposite sides of the hold, extending over the length of travel of the carriage and anchored at their ends. Each chain is led through idler sprockets 38 on the carriage to a respective driving sprocket 40 driven by e.g. an automatically braked hydraulic motor 42. Both motors are driven simultaneously (power is provided from a hydraulic generator compartment 44 on the carriage for these and other hydraulic motors of the installation) to impart a balanced driving force to the carriage, drawing the carriage along the chains so that it can be progressed along the length of the hold.

The pivoted boom 6 is supported at its end adjacent the bucket wheel by cables 50, 52 on opposite sides of the carriage, a common winch drum 54 on one side of the carriage having both cables reeled onto it. The supporting cable 50 on the winch side runs around a rear pulley 56 on the carriage, then returns from there, over an upper guide pulley 58, to be taken around multiple sheaves comprising an upper pair 60 mounted on the free ends of the carriage side members 2a and a lower pair 62 mounted at the bottom of the adjacent end of the boom, the end of the cable being fastened off on the carriage side members. The other supporting cable 52 is led from the winch drum to the other side of the carriage by way of guide pulleys 64,66 mounted on the cross member 2b of the carriage below the boom, over an upper guide pulley 68, placed on the opposite arm 2a from that carrying the first guide pulley 58, and round further multiple sheaves 60,62 for the cable 50. An automatically braked hydraulic motor 70 driving the winch drum reels in and pays out both cables 50, 52 together, so that a balanced lifting force is applied for luffing the boom and supporting it at a required position.

The boom conveyor 16 comprises a studded or cleated belt 72 extending between a motor driven drum 74 adjacent the boom pivots and a return drum 76 that is disposed inside the inner rim of the bucket wheel, above its stub-shaft mounting. Troughing idler rollers 78 support the upper run of the belt between these end drums.

The bucket wheel is rotated on its journal support 14, e.g. by a pair of hydraulic motors 80 supported on the boom and having respective drive pinions (not shown) engaging a common gear ring 82 on the wheel. The buckets 84 of the bucket wheel are of the cell-less type, that is to say they are open on their radially inner face, their material-collecting space being defined by front and rear walls and a curved outer wall acting as a scoop. In order to retain the material in each bucket as it begins to rise out of the hold, an arcuate cover plate 86 is fixed to the boom head to overlie the inner rim of the bucket wheel over a part of its peripheral extent. The cover plate terminates near the top of inner rim where it is fixed to a chute 88 opening onto the belt 72 of the conveyor 16, so that material that has been held in the buckets is then able to fall freely through the chute onto the conveyor belt and be carried away along the boom. The chute is provided with flexible screen walls 90 that extend some distance along the conveyor belt to limit spillage of material as it falls onto the belt.

A further chute 94 at the rear end of the boom, mounted on the carriage cross-member 2b, transfers material from the boom conveyor 16 onto the cross conveyor 18, driven also by a motorised drum 96, that raises the material to a discharge chute 98, also mounted on the carriage, through which the material falls onto the fixed ship-side conveyor 20. Since this conveyor 20 runs the length of the hold, the material will discharge continuously onto it as the carriage progresses along the hold.

Walkways 100 are provided on the carriage for ready access to such parts of the installation as the boom conveyor

0020167

and the various drive units, and also to an operator's cabin 102, on the carriage adjacent the head of the boom, from which unloading is controlled so that the operation of the bucket wheel can be clearly seen at all stages.

The boom and bucket wheel are shown in a position in which they may be stowed during the passage of the ship. The unloader in this example is disposed forwards of the bridge and to improve the line of sight from the bridge while the unloader is not in use the chosen position is below the fully raised position, in which the bucket wheel may be held completely above deck level in order to allow the carriage to be driven past the limits of the hold if required.

During unloading, the carriage is progressed along the length of the hold while the bucket wheel is supported, through the luffing drive of the boom winch drum 54, at a height that gives the required depth of penetration into the material in the hold - usually less than the radial depth of the buckets. In this way it is possible to reduce the possibility of the bucket wheel becoming jammed in the material, although it is still desirable to provide the gear teeth of the bucket wheel gear ring 82 with large root clearances to prevent the tooth spaces becoming packed with foreign matter as the teeth mesh with the teeth of the drive pinions of the bucket wheel drive motors.

Because of its orientation, the bucket wheel is able to pick up material in both directions of travel of the carriage, so that unloading can be performed substantially continuously. At the end of each pass, it is necessary simply to lower the boom a further amount to pick up more material, and the process can be wholly or partly continued under automatic control if desired - as regards the luffing of the boom and/or the travel of the carriage. Because the diameter of the bucket wheel is nearly equal to the width of the hold there is no need to traverse the wheel laterally and there is no danger of leaving material at the sides to collapse upon the bucket wheel or otherwise jam the unloader.

The hold bottom is preferably convex shaped in transverse profile, as illustrated, to suit the circular profile of the bucket wheel, which can be done relatively simply and economically without requiring an unusual hull profile or wasting any significant amount of space within the hull. It is of course not necessary to match the profiles exactly, as any loose material at the sides of the hold will tend to fall into the path of the bucket wheel as material is removed from the hold, and it will in any case not be important to ensure that the small final part of a cargo is removed completely. Safety chains (not shown) may be attached to the boom to ensure that the bucket wheel is kept out of contact with the bottom of the hold.

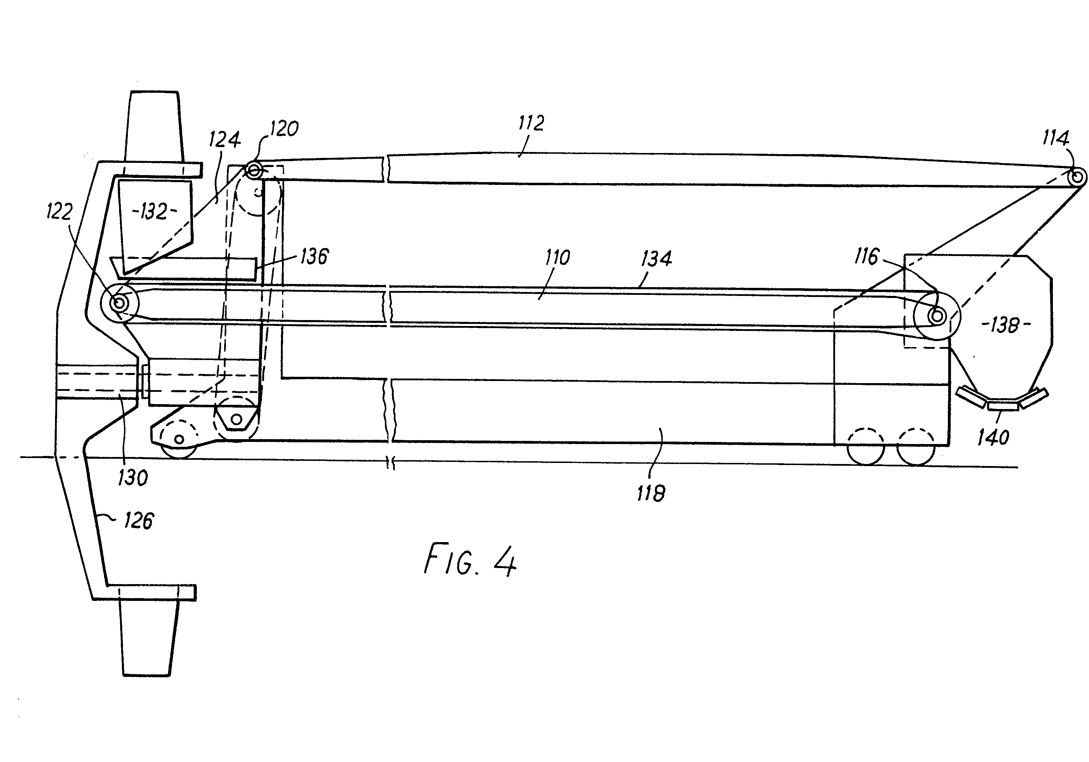

Fig. 4 illustrates a modification of the apparatus in Figs. 1 to 3, intended to cope with the removal of material from a storage space that is of such a depth that the bucket wheel would be tilted to too great an inclination to operate effectively if it were mounted on a fixed axis relative to the luffing boom.

In this modified construction, luffing boom 110 has upper links 112 above and parallel to it, the boom and the links having respective upper and lower rear pivots 114,116 with the longitudinally displaceable carriage 118 and upper and lower forward pivots 120,122 with bucket wheel head 124 on which the bucket wheel 126 is mounted to rotate upon a stub shaft 130 projecting longitudinally from the head. The distance between the upper pivots 114,120 is equal to that between the lower pivots 116,122 and the arms 112 thereby act with the boom as a parallelogram linkage supporting the bucket wheel so that its stub shaft axis is held in the same orientation, independently of the extent to which the boom has been lowered.

The head 124 carries the drive motor or motors (not shown) of the bucket wheel and also a chute 132 through which the buckets discharge their collected material onto boom conveyor belt 134 as they reach the top of the wheel. The bottom of the chute is inclined away from the conveyor belt in the boom position illustrated: this leaves sufficient clearance for the required downward luffing of the boom. The gap between the chute and the conveyor belt is always at least partly covered by side screens 136 of flexible material that are secured directly to the boom structure so as to be able to overlap the sides of the chute 132. At the rear of the boom, the material is discharged from the conveyor 134 into a

chute 140 fixed to the carriage above a cross-conveyor 142, as in the apparatus of Figs. 1 to 3. In all other respects the construction and operation of the apparatus can be as already described with reference to that first embodiment of the invention.

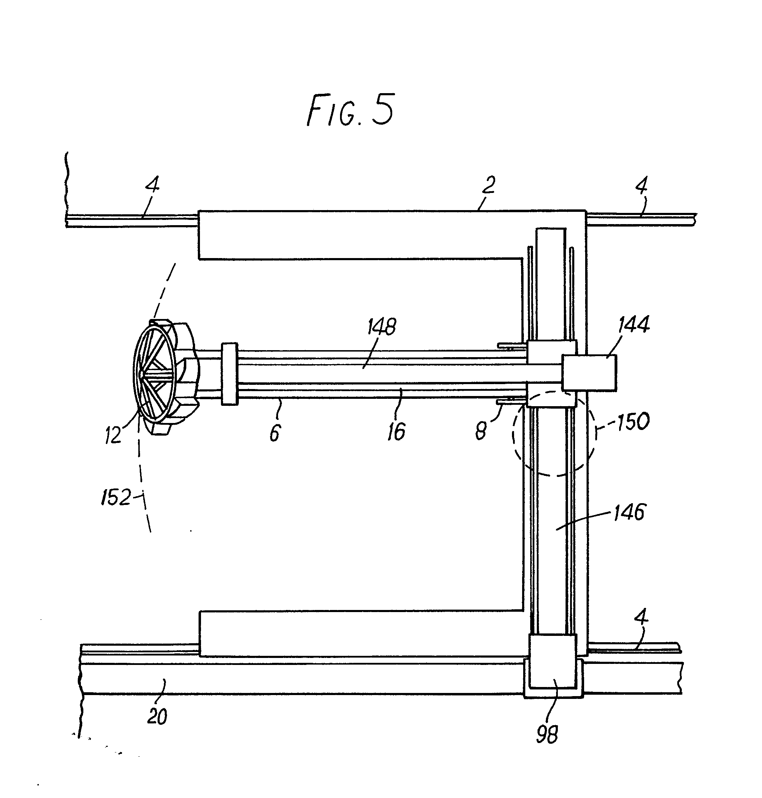

It will be clear from the description of Figs. 1 to 3 that the choice of a bucket wheel diameter close to the width of the material storage space simplifies the construction and operation of the unloader, but there may be instances in which the wheel would then be excessively large if the storage space is very wide. It is therefore possible within the scope of the invention to provide a traversing mechanism so that the bucket wheel can be limited to a diameter considerably less than the width of the space. Thus, the luffing boom / may be arranged to slew or it can be mounted at its pivoted end on a cross-carriage that is transversely displaceable on the main longitudinally movable carriage, and the boom conveyor can be arranged to discharge onto a cross-conveyor that runs the extent of the cross-carriage travel. This is illustrated in Fig. 5, where parts described in the previous figures have been indicated by the same reference numerals and the cross-carriage and cross-conveyor are indicated by the numerals 144, 146 respectively. The depth of penetration of the wheel into the stored material can still be controlled as already described, although in the illustrated example the free end of the boom adjustably suspended from a support arm 148 directly above the boom, and the need to traverse the wheel laterally will not prevent it operating in both directions of longitudinal travel. Fig. 5 also shows in outline the alternative slewing arrangement referred to above, in which a slewing mounting 150 at the centre of the carriage cross member permits the boom to be slewed to move the bucket wheel 12 to either side of the hold along the path 152.

It will be understood that the unloader described above can be modified in many other ways within the scope of the invention. The forms of drive for the moving parts can be chosen to meet particular requirements and any suitable motive power source can be employed. Similarly other types of conveyor belt can be used. Also, although the bucket wheel described is of the cell-less type, in some instances it may be preferable to use a cell type or a semi-cell type of bucket wheel to suit the material being handled.

CLAIMS

1.       A bucket-wheel unloader comprising a carriage (2) carrying a bucket wheel (12) that is displaceable along a storage space such as a ship's hold (H) for bulk material, characterised in that the bucket wheel is mounted on a boom (6) having a pivot (8) remote from the bucket wheel to adjust the bucket wheel position upwardly and downwardly on the carriage, the bucket wheel being rotatable in a plane transverse to the direction of movement of the carriage along the storage space to transfer bulk material onto conveying means (16) extending along the boom, as the carriage moves along said space for said material to be carried by the boom conveying means to off-loading means.

2.       A bucket-wheel unloader according to claim 1 comprising a conveyor (18) extending transversely on the carriage and arranged to receive the material from said boom conveying means and transfer it to further conveying means (20) adjacent the unloader.

3.       A bucket-wheel unloader according to claim 1 or claim 2 wherein the boom has fixed to it a shield plate (86) extending around an inner peripheral portion of the bucket wheel to a chute (88) disposed at an upper region of said inner periphery and above said boom conveying means, to retain material picked up by the bucket wheel before the material is raised to the region of the chute.

4.     A bucket-wheel unloader according to any one of claims 1 to 3 wherein the carriage comprises a generally U-form structure with side members (2a) of said structure on each side of the boom extending in the longitudinal direction of the boom to adjacent the bucket wheel.

5.     A bucket-wheel unloader according to any one of the preceding claims wherein the bucket wheel is mounted on a rotary axis (14) that is inclined with respect to the longitudinal axis of the boom such as to be upwardly tilted relative to the boom.

6.     A bucket-wheel unloader according to any one of the preceding claims comprising means for maintaining the orientation of the bucket wheel rotary axis relative to the vertical independently of the movement of the boom about its pivot axis.

7.     A bucket-wheel unloader according to any one of the preceding claims wherein the boom is mounted on the carriage through means (144 or 150)on which the boom and bucket wheel can be displaced transversely of the direction of movement of the carriage.

8.     A ship having a bucket wheel unloader according to any one of the preceding claims for unloading bulk material from an elongate hold over which the unloader carriage is mounted and is movable longitudinally of the hold.

9.      A ship having an elongate hold (H) for bulk material and provided with a bucket wheel unloader for said material comprising a bucket wheel (12) on a carriage (2) mounted over the hold and movable longitudinally of the hold, characterised in that the bucket wheel is mounted on the carriage through a boom (6) having a pivot (8) remote from the bucket wheel to adjust the bucket wheel position upwardly and downwardly on the carriage, the bucket wheel being rotatable in a plane transverse to the direction of carriage movement and the bucket wheel having a diameter that extends across the major part of the width of the hold, rotation of the bucket wheel as the carriage is progressed along the hold being arranged to transfer material from the hold for off-loading by way of conveying means (16) extending along the boom.

10. A ship according to claim 9 wherein the bottom of the hold has a transverse profile corresponding approximately to the transverse profile of the lower part of the wheel when it is lowered on the boom to adjacent the bottom of the hold.

11. A ship according to claim 9 or claim 10 wherein the boom can be raised to a position in which the boom and bucket wheel are above the level of the deck at least at one end of the hold.

12. A ship according to any one of claims 9 to 11 wherein the carriage has a generally U-form construction comprising a cross member (2b) at the pivoted end of the boom and side members (2a) extending from said cross-member to adjacent the bucket wheel, and the carriage is mounted on rails (4) running on both sides of the hold through wheels (30,32) on said side members.

0020167

FIG. 1

FIG. 2

0020167

0020167

*Fig. 3*

*FIG. 4*

0020167

FIG. 5

| Category | Citation of document with indication, where appropriate, of relevant passages | Relevant to claim |
|---|---|---|
| | US – A – 3 819 065 (M. TOMIZAWA et al)<br><br>* column 2, lines 66–68; column 3, lines 1–24; column 4, lines 9–30,38–64; column 6, lines 16–29; figures 1–4 * | 1,8,10 |
| | FR – A – 1 524 139 (MATIMCO)<br><br>* page 4, right-hand column; figures 17 and 18 * | 2,7,8 |
| D | US – A – 3 326 546 (D.B. SALE)<br><br>* column 3, lines 65–75; figure 4 * | 3 |
| | DE – B – 1 206 361 (BETEILIGUNGS– UND PATENTVERWALTUNGSGESELLSCHAFT)<br><br>* column 2, lines 28–33; column 3, lines 17–22; figure * | 5,7 |
| | DE – A – 2 620 154 (G. SCHADE)<br><br>* page 9, second half, pages 10,11,12, 13; figures 1–4 * | 2,8,11 |
| | US – A – 3 536 208 (P.J. MADDEX et al)<br><br>* column 2, lines 23–75; column 3, lines 1–39; figures 1–7 * | |
| A,D | GB – A – 1 528 088 (THYSSEN INDUSTRIE) | |
| A,D | GB – A – 1 385 805 (ALLIS–CHALMERS CANADA) | |
| A,D | GB – A – 1 369 418 (ATELIERS ET CHANTIERS DE BRETAGNE) | |

**CLASSIFICATION OF THE APPLICATION (Int. Cl. 3)**

B 63 B 27/22 //
B 65 G 65/20

**TECHNICAL FIELDS SEARCHED (Int.Cl. 3)**

B 63 B
B 65 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 10.09. 1980 | PROSEN |

EPO Form 1503.1   06.78